# EUROPEAN PATENT APPLICATION

(11) **EP 4 607 233 A1**
(43) Date of publication of application: **27.08.2025**
(21) Application number: 24158860.7
(22) Date of filing: 21.02.2024
(51) Int. Cl.: G01S 7/03, H01Q 5/00, H01Q 5/307, H01Q 21/06

(54) **RADAR ANTENNA, SIGNAL HANDLING COMPONENT AND METHOD FOR RADAR DETECTION OF AN OBJECT**

(71) Applicant: HENSOLDT Sensors GmbH, 82024 Taufkirchen (DE)
(72) Inventor: Hanewinkel, André, 89079 Ulm (DE); Schuh, Patrick, 89275 Elchingen (DE); Müller, Alexander, 73560 Böbingen an der Rems (DE); Appel, Holger, 89077 Ulm (DE)
(74) Representative: LifeTech IP Spies & Behrndt Patentanwälte PartG mbB

(57) **Abstract**

A radar antenna (100) comprises a first set of antenna elements (no), configured to transmit or receive radio signals at a first carrier frequency (113), and a distinct second set of antenna elements (120), configured to transmit or receive radio signals at a second carrier frequency (123) which is higher than the first carrier frequency. A first distance (115) between any two antenna elements (110) of the first set and a second distance (125) between any two antenna elements (120) of the second set are both bounded below by one half of a wavelength corresponding to the first carrier frequency.

## Description

The present invention relates to a radar antenna, a signal handling component for a radar antenna, a method for radar detection of an object, a radar system, and in particular to multiplication of radar measurement accuracy by merged dual frequency band e-scan antenna with full populated primary and sparse secondary array.

### BACKGROUND

Radar antennas often comprise a plurality of antenna elements for transmitting and receiving radio (or radar) signals. Examples of such radar antennas are phased array or, more specifically, electronically scanning antennas. Antenna elements are typically configured, by means of phase shifters or transmit/receive modules, to transmit or receive a signal with an individual phase, thereby implementing a form of a radar beam, represented by an antenna gain or directivity of the antenna. In the antenna gain, side lobes, and in particular grating lobes or second main lobes, are suppressed by having a minimal distance between the antenna elements set to one half of the wavelength corresponding to the transmitted or received carrier frequency ("lambda/2").

In conventional ESA (electronically scanned array) radar antennas, increasing an aperture size to increase an accuracy of detection can be achieved by increasing a number of transmit/receive modules or phase shifters for the antenna elements while keeping the half-wavelength distance between the elements. This results in linearly higher production costs. Alternatively, a higher accuracy can be achieved by increasing a carrier frequency, which comes at the cost of increasing the number of transmit/receive modules per area of the radar antenna. Production costs are therefore increased as well.

There is an ongoing demand for increasing measurement accuracy and efficiency of radar systems and radar antennas, without increasing size, weight power or production costs.

### SUMMARY OF THE INVENTION

A contribution to solving the above-mentioned problems is provided by a radar antenna according to claim 1, a signal handling component according to claim 4, a method for radar detection of an object according to claim 5, and a radar system according to claim 8. The dependent claims refer to further advantageous realizations for the subject matter of the independent claims.

The present invention relates to a radar antenna comprising a first set of antenna elements, configured to transmit or receive radio signals at a first carrier frequency, and a second set of antenna elements, which is disjoint from the first set and configured to transmit or receive radio signals at a second carrier frequency which is higher than the first carrier frequency. A first distance between any two antenna elements of the first set and a second distance between any two antenna elements of the second set are both bounded below by one half of a wavelength corresponding to the first carrier frequency. In other words, there is a threshold for distances between antenna elements of the first set which also holds for distances between antenna elements of the second set. That is, although the second set of antenna elements is configured to transmit or receive radio signals at the second, higher, carrier frequency, the antenna elements of the second set are not spaced apart by one half of a wavelength corresponding to the second carrier frequency, but are arranged more sparsely. While for radio signals transmitted or received at the first carrier frequency, the radar antenna may offer an antenna gain or directivity with a pronounced main lobe and no or strongly suppressed side or grating lobes, the radio antenna exhibits, for the radio signals transmitted or received at the second carrier frequency, an antenna gain with a narrow main lobe and several strongly peaked grating lobes.

In embodiments, the radar antenna may be a phased array antenna. The antenna elements may be arranged in a regular way, such as in a triangular, hexagonal or rectangular lattice, and the radar antenna may be configured to implement a phase shift between signals transmitted or received for each antenna element in order to obtain a particular form of a radar beam or gain.

The radar antenna is not necessarily an active radar antenna, i.e. not necessarily configured to transmit radio signals either at the first or at the second carrier frequency. The radar antenna may be part of a bi- or multistatic radar system, where it acts as a receiving counterpart to some active antenna. The radar antenna may also be part of a passive radar system which is based on detecting an object by receiving radio waves transmitted by stationary (non-cooperating) emitters of e.g. radio, television, cellular or other communication networks. However, in embodiments, the radar antenna is an active antenna, i.e. configured to transmit and receive radio signals. The antenna elements may be configured such that the radar antenna is a multiple-input multiple-output antenna, wherein a functionality of the antenna elements may be described by means of virtual antenna elements, as is known in the art.

A carrier frequency may be understood as a basic frequency of the radio signal. The radio signal may include amplitude, phase and frequency modulations, wherein frequency modulations typically change the frequency on a scale much smaller than the first or second carrier frequency. The first and the second carrier frequency may be between 30 MHz and 300 GHz. The second carrier frequency is strictly greater than the first carrier frequency. The second carrier frequency may be an integer or half-integer multiple of the first carrier frequency. In embodiments, the first carrier frequency may e.g. be 10 GHz, while the second carrier frequency may be 35 GHz. However, a quotient of the second carrier frequency over the first carrier frequency may take any real value greater than 1.

Optionally, antenna elements of the first set are arranged in a first array, and antenna elements of the second set are arranged in a second array which is distinct from the first array, wherein a nearest-neighbor distance of the first array is equal to a nearest-neighbor distance of the second array. An array may be understood as a one- or two-dimensional lattice, which in embodiments is e.g. rectangular or hexagonal. An array is understood as having a nearest neighbor distance between adjacent antenna elements, which coincides with a respective minimum and thus represents the lower bound of a distance between any two antenna elements in the respective array.

Optionally, the radar antenna is an electronically scanned array, i.e., a phased array antenna where the phase shift of an antenna element is individually adjustable. The radar antenna may be a passive electronically scanned array, PESA, in which all the antenna elements are connected to a single transmitter and/or receiver through phase shifters under the control of a single computer or processor.

In other embodiments, the radar antenna may be an active electronically scanned array antenna, AESA, in which each antenna element is connected to an individual transmit/receive module which are hierarchically combined to perform the functions of transmitting and receiving for the radar antenna. In some embodiments, antenna elements configured for the first carrier frequency and antenna elements configured for the second carrier frequency can be equipped with their own respective transmit/receive modules.

In other embodiments, the radar antenna may be a metamaterial-based electronically scanned array antenna, MESA. Metamaterials may be understood as materials which have been arranged artificially to comprise repeating patterns, typically at scales that are smaller than the wavelengths of the phenomena they influence. Properties of metamaterials may arise not from the properties of their base or constituent materials, but from their designed structure, which may be employed in a design of the radio antenna in order to obtain very wide bandwidth or very high gain in a small structure.

The person skilled in the art will appreciate that the idea of employing the second (higher) frequency may in fact also be realized with a conventional antenna including radiating elements, and especially in passive radar, e.g. for a conventional PESA antenna, or for an array of antenna elements without electronic beam steering. In such an antenna, a conventional signal handling component (e.g., a transmit-receive component or module) may be replaced by a signal handling component which generates or processes radio signals in both the first carrier frequency and the second carrier frequency. In such a case, the antenna elements of the first set and antenna elements of the second set are in fact identical, i.e., the same antenna elements are employed to radiate both radio signals at the first carrier frequency and radio signals at the second carrier frequency. This can be advantageous for specific choices or quotients of the second carrier frequency over the first carrier frequency, and in particular for low values (such as values up to 2) of this quotient. It is understood that the radar antenna is configured to feed the first carrier frequency and the second carrier frequency to the antenna elements. In embodiments, this can also be realized by providing distinct ports for the first carrier frequency and the second carrier frequency, respectively.

Embodiments therefore also refer to a signal handling component for a radar antenna, wherein the radar antenna comprises a first set of antenna elements and a second set of antenna elements. The first set and the second set are now not necessarily disjoint and may in fact even coincide, i.e., the antenna elements of the first may just be the antenna elements of the second set. However, characterizingly, a first distance between any two antenna elements of the first set and a second distance between any two antenna elements of the second set are still both bounded below by one half of a wavelength corresponding to the first carrier frequency. In other words, a first minimal distance between antenna elements of the first set, and a second minimal distance between antenna elements of the second set may be the same. The signal handling component however is configured to handle, via the first set of antenna elements, radio signals at the first carrier frequency, and to handle, via the second set of antenna elements, radio signals at a second carrier frequency which is higher than the first carrier frequency.

The expression "signal handling component" may refer to a component which generates radio signals for transmission by the antenna elements, or which receives radio signals via the antenna elements in order to process them. Especially in passive radar systems, it may not be necessary that the signal handling component is configured to generate and transmit radio signals.

The signal handling component may comprise several sub-components. In particular, a sub-component configured to receive and/or process radio signals via the first or second set of antenna elements may be separated from a sub-component configured to transmit, or generate, radio signals via the first or second set of antenna elements. However, in other embodiments, the signal handling component may be realized as a single unit. The signal handling component may in particular comprise the transmit/receive modules of (or for) the antenna. In AESA antennas, such a signal handling component is typically integrated, i.e. comprised within the antenna. However, especially in PESA antennas the signal handling component may be only partially integrated, or even structurally separated - or separable - from the antenna. In such a case, a conventional signal handling component may be easily replaced by the signal handling component described here.

It is understood that the radar antenna disclosed above, having in particular the first set of antenna elements disjoint from the second set of antenna elements, may include a signal handling component of the type just disclosed.

Embodiments further refer to a method for radar detection of an object. The method comprises detecting the object based on transmitting and/or receiving, by a first set of antenna elements, a first radio signal with a first carrier frequency. After detecting, the method comprises redetecting the object, based on having detected the object and based on transmitting and/or receiving, by a second set of antenna elements, a second radio signal with a second carrier frequency which is higher than the first carrier frequency, wherein a first distance between any two antenna elements of the first set and a second distance between any two antenna elements of the second set are both bounded below by one half of a wavelength corresponding to the first carrier frequency. Typically, while for radio signals at the first carrier frequency, an antenna gain may have a pronounced but broad main lobe and suppressed side or grating lobes, for radio signals at the second carrier frequency this method will result in an antenna gain which has a comparatively narrow main lobe and several strongly peaked greating lobes (or main side lobes).

The method is advantageously carried out by a radar antenna and a signal handling component as disclosed before, i.e., radio signals at the first carrier frequency and at the second carrier frequency are transmitted or received via the first antenna elements and the second antenna elements, which are comprised in a single radar antenna.

Optionally, detecting the object includes determining an azimuth, an elevation, a range and/or a velocity of the object. Thus, based on radio signals at the first carrier frequency, comprehensive object information including azimuth, elevation, range and/or Doppler information may be obtainable.

Optionally, redetecting the object comprises filtering, based on having detected the object, a position of the object within data obtained by transmitting or receiving the second radio signal. Here, filtering may be understood as isolating a desired signal of the object in received radar data, while disposing of undesired artifacts like secondary signals of the object, clutter or other glitches arising from the higher number of side lobes in the radio signal at the second carrier frequency. In embodiments, filtering the object may in particular pertain to removing, in the received second radar signal, false targets, introduced by grating lobes due to using the second carrier frequency in the process of redetecting the object, wherein the removing is based on information obtained in the first carrier frequency, in the process of detecting the object. Redetecting the object may thus take into account a priori information obtained from radio signals at the first carrier frequency, which may result e.g. in knowing a range-cell and Doppler-bin for the object. The filtering may then be performed in order to detect, localize and/or track the object within a range-Doppler matrix obtained based on radio signals at the second carrier frequency. Based on the filtering, all false or artificial targets or artifacts caused by grating lobes can be eliminated, using appropriate statistics. Furthermore, parameters like azimuth and elevation of the object can be measured with increased accuracy, due to the narrow main lobe of the antenna gain for radio signals at the second carrier frequency.

Embodiments further refer to a radar system comprising a radar antenna with a first set of antenna elements and a second set of antenna elements, wherein a first distance between any two antenna elements of the first set and a second distance between any two antenna elements of the second set are both bounded below by one half of a wavelength corresponding to the first carrier frequency, and the signal handling component as described above, i.e. configured to handle, via the first set of antenna elements, radio signals at the first carrier frequency, and to handle, via the second set of antenna elements, radio signals at a second carrier frequency which is higher than the first carrier frequency.

The radar antenna may be a conventional phased array antenna or electronically scanned array antenna - in such a case, the first set of antenna elements may coincide with the second set of antenna elements, such that each antenna element is employed for transmitting or receiving radio signals both at the first carrier frequency and at the second carrier frequency.

Optionally, however, the first set of antenna elements is disjoint from the second set of antenna elements, i.e., there are two distinct subsets of antenna elements, and the radar antenna may comprise any of the further features disclosed above.

Optionally, the radar antenna comprises at least one further set of antenna elements such that a respective further distance between any two antenna elements of the at least one further set is bounded below by one half of the wavelength corresponding to the first carrier frequency, and the signal handling component is configured to handle, via the at least one further set of antenna elements, radio signals at a corresponding further carrier frequency which is higher than the first carrier frequency. It is thus clear that there may be any number of further higher carrier frequencies, and corresponding sparse arrays of antenna elements.

Optionally, the radar system is configured to automatically or semiautomatically perform the method described above, based on the radar antenna and the signal handling component.

Optionally, the radar system is configured to employ radio signals at the first carrier frequency for surveillance, and radio signals at the second carrier frequency for fire control of a weapons system. The weapons system may be a gun-based close-in weapons system, CIWS. The radar system may be an integral part of the weapons system. Surveillance may be understood as a function to continuously look for and detect objects over some period of time. Fire control may be understood as a function to control one or more weapons of the weapons system for attacking the object.

Optionally, the radar system may be a radar surveillance system, or a component thereof. It may thus be configured to transmit or receive radio signals at the first frequency and radio signals at the second frequency in order to detect objects within a monitored area or space. In embodiments, the radar system may in particular be configured to detect airplane traffic.

Alternatively, or in addition, the radar system may be a radar communication system, or a component thereof. It may thus be configured to employ the first carrier frequency and the second carrier frequencies (as well as possible further carrier frequencies) for transmitting and receiving radio signals from the radio antenna to some other radio antenna, wherein the radio signals are adapted to communicate information. Such a radar communication system may in particular be adapted for a use on a battlefield.

Alternatively, or in addition, the radar system may be a radar traffic control system, or a component thereof. In embodiments, this may be an air traffic control system, e.g. for controlling civilian aviation at or around an airport. In other embodiments, this may be a land vehicle traffic control system, and in particular adapted for detecting a speed of a land vehicle. In other embodiments, this may be a sea vessel traffic control system for controlling ships or other water vehicles. Alternatively, or in addition, the radar system may be a radar navigation control system, or a component thereof. The navigation control system may be installed on a land, air or sea vehicle, and configured to provide guiding to the vehicle.

Aspects of advantageous embodiments of the radar antenna, the method and the radar system can be summarized as follows.

The disclosed radar antenna, method and radar system may employ a dual- or multiple-band frequency electronic scanning aperture wherein a single radar antenna is configured to operate at a lower first carrier frequency and at a higher second carrier frequency. The radar antenna may employ the same antenna or radiating elements, or distinct antenna elements for the two respective carrier frequencies. All antenna elements, independent of radiators of first or second carrier frequency, may be positioned with the half-wavelength minimal distance of the lower first carrier frequency. The antenna elements transmitting or receiving the first carrier frequency may therefore form a standard phase array with full beam steering capability over an angle of e.g. ±60°. A same aperture size may be used for the higher second carrier frequency. This can result in an extremely narrow beam width and therefore high measurement accuracy. To reduce antenna costs, antenna elements transmitting or receiving the higher second carrier frequency do not satisfy a respective lambda/2 criterion for the second carrier frequency. Rather, they are arranged more sparsely, and may exhibit a minimal distance of e.g. a double of the wavelength corresponding to the second carrier frequency.

One common underlying idea of the radar antenna, the method and the radar system is to employ a two-step detection process with a detection in a higher carrier frequency by a set of comparatively sparse antenna elements in a second step. This has two consequences generally considered to be disadvantageous in conventional systems.

As a first consequence, a directivity of the radar antenna is obstructed for radio signals at the second carrier frequency, and therefore a power transmitted or received by the radar antenna in the second carrier frequency can not be retrieved completely, as energy is wasted inside the side or grating lobes. This effect is taken into account and not relevant, as the range performance does not necessarily need to be higher for radio signals in the second carrier frequency than in the primary frequency.

A second consequence is an increase in detection artifacts due to the occurrence of side or grating lobes for radio signals at the second carrier frequency. These artifacts can be completely filtered based on radio signals at the first carrier frequency, e.g. within a signal processing on a range-Doppler matrix level.

Advantageous embodiments of the disclosed radar antenna, signal handling component, method and radar system combine surveillance and fire control radar functionalities. These embodiments may be employed in battlefield vehicles on land or sea, or in the air or space. For example, embodiments may be employed for a conventional close-in weapon system, CIWS. Further advantageous embodiments may be adapted for wide range observation or surveillance.

Advantages of the disclosed radar antenna, signal handling component and method and radar system include that based on a combination of two or more frequency bands, an accuracy of the radar detection can be increased without increasing a number of transmit/receive modules. This means that an increase of measurement accuracy is not linked to an increase of production costs, size or power; the disclosed subject matter can provide a higher accuracy by keeping size, weight and power of the radar antenna or system low. The disclosed radar antenna, method and radar system can thus improve the accuracy of the radar system while at the same time providing a reduced size, weight, power and costs. With disadvantages consciously accepted and turned into features by this dual- or multiple-band concept within the signal processing, an accuracy of e-scan radar systems can be multiplied while keeping production costs on a same level.

Advantages further include that conventional radar antennas comprising a set or array of antenna elements can be upgraded by replacing a conventional signal handling component with a signal handling component as described above, i.e. a signal handling component which is configured to handle, via the set of antenna elements, radio signals at a first carrier frequency for which the array was originally intended, as well as to handle, via the same set of antenna elements, radio signals at a second carrier frequency which is higher than the first carrier frequency. Based on this upgraded radar antenna, the method as described above can be carried out.

### BRIEF DESCRIPTION OF THE DRAWINGS

Various embodiments of the present invention will be described in the following by way of examples only, and with respect to the accompanying drawings, in which:
- Fig. 1: illustrates a radar antenna according to the present invention.
- Fig. 2: illustrates a further embodiment of the radar antenna.
- Fig. 3: shows antenna gains at the first carrier frequency and at the second carrier frequency.
- Fig. 4: illustrates how data obtained at the first carrier frequency may be employed to improve an accuracy of detection at the second carrier frequency.
- Fig. 5: shows range-Doppler matrix data at the second carrier frequency before and after a filtration based on data obtained at the first carrier frequency.
- Fig. 6: illustrates an evaluation of azimuth and elevation after range and Doppler filtering in the range-Doppler matrix.
- Fig. 7: shows steps of a method according to the present invention.

### DETAILED DESCRIPTION

Various examples will now be described more fully with reference to the accompanying drawings in which some examples are illustrated. It should be understood that there is no intent to limit examples to the particular forms disclosed, but on the contrary, examples are to cover all modifications, equivalents, and alternatives falling within the scope of the disclosure as defined by the subsequent claims and the description.

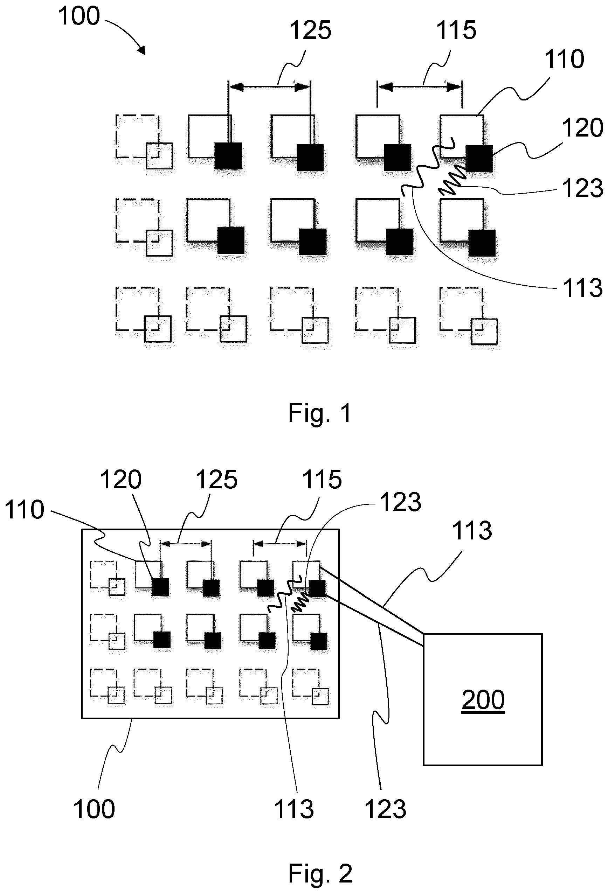

**Fig. 1** illustrates an embodiment of a radar antenna 100 comprising a first set of antenna elements 110, configured to transmit or receive radio signals at a first carrier frequency 113, and a second set of antenna elements 120, configured to transmit or receive radio signals at a second carrier frequency 123 which is higher than the first carrier frequency. The set of first antenna elements 110 is disjoint from the set of second antenna elements 120, i.e., the antenna elements 110 in the first set are different from the antenna elements 120 in the second set. The radar antenna 100 is configured to transmit the radio signals at the first carrier frequency 113 and radio signals at the second carrier frequency 123 by means of the antenna elements 110, 120. A first distance 115 between any two antenna elements 110 of the first set and a second distance 125 between any two antenna elements 120 of the second set are both bounded below by one half of a wavelength corresponding to the first carrier frequency.

The radar antenna 100 may be a dual-band frequency electronic scanning aperture with a lower primary frequency as the first carrier frequency and a higher secondary frequency as the second carrier frequency. The figure shows aperture design and a positioning of antenna elements 110, 120 at a minimal distance 115, 125 of one half of a wavelength corresponding to the first carrier frequency for antenna elements 110, 120 of both the first set and the second set (primary and secondary frequency elements).

The first set of antenna elements 110 is configured as a first array, and the second set of antenna elements 120 is configured a second array. A minimal first distance 115, i.e. the nearest-neighbor distance of the first array, is equal to a minimal second distance 125, i.e. the nearest-neighbor distance of the second array. Thus radiating elements 110, 120, are respectively positioned with the half-wavelength distance 115, 125 of the lower primary frequency. The primary frequency radiating elements 110 therefore create a standard phase array with full beam steering capability over angle ±60°. An antenna gain of the secondary frequency radiating elements 120 will typically comprise pronounced but narrow main and grating lobes. The first array covers a same aperture size as the second array.

In the depicted embodiment, each of the antenna elements (120) of the second set is realized in close proximity of, or is even partially overlapping with, an antenna element (110) of the first set. In other embodiments there may be more distance between antenna elements of the first set and antenna elements (120) of the second set. A distance between antenna elements (110) of the first set and antenna elements (120) of the second set is not bounded below by one half of the wavelength corresponding to the first carrier frequency.

**Fig. 2** illustrates a radar system with a signal handling component 200 according to the present invention. The radar system comprises a radar antenna (100) with a first set of antenna elements (110) and with a second set of antenna elements (120). A first distance (115) between any two antenna elements (110) of the first set and a second distance (125) between any two antenna elements (120) of the second set are both bounded below by one half of a wavelength corresponding to the first carrier frequency. The signal handling component 200 is configured to handle (i.e., to transmit and/or to receive), via the first set of antenna elements (110), radio signals at the first carrier frequency (113), and it is furthermore configured to handle, via the second set of antenna elements (120), radio signals at a second carrier frequency (123) which is higher than the first carrier frequency (113).

In the depicted embodiment, the first set of antenna elements 110 is distinct from the second set of antenna elements 120. However, this is not strictly necessary. In other embodiments, the antenna elements 110 of the first set and the antenna elements 120 of the second set are just the same, i.e., the radar antenna 100 may be configured with just one set or array of antenna elements which are employed, by the signal handling component 200, to transmit or receive radio signals at both the first carrier frequency and the second carrier frequency.

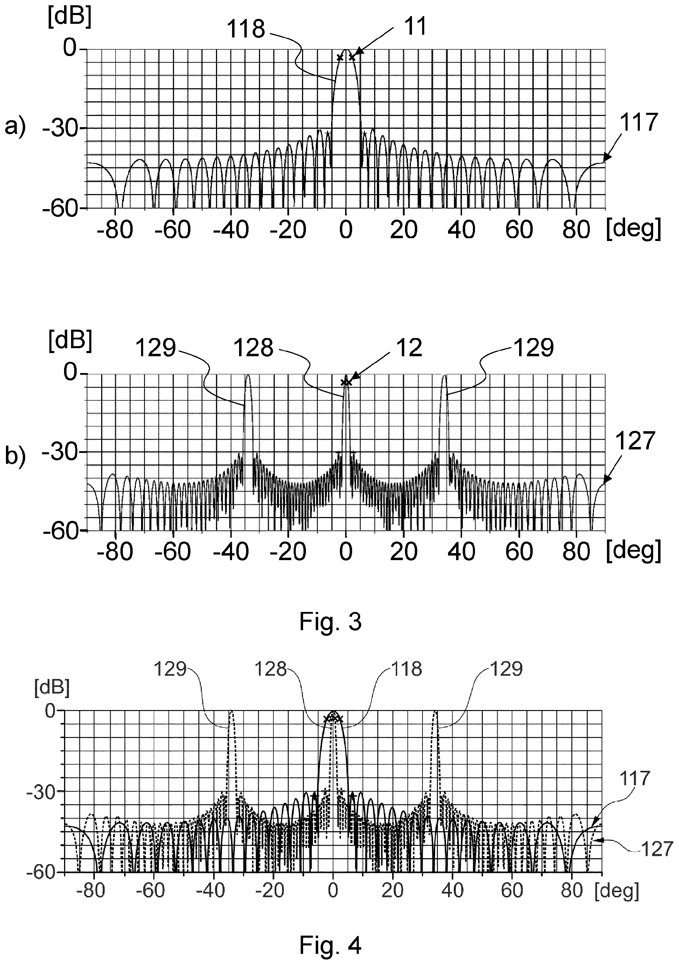

**Fig. 3** shows, in an upper part a), a diagram for illustrating an antenna gain 117 (or pattern or directivity) of radio signals at the first carrier frequency 113 for an embodiment of the radar antenna 100. The diagram shows an intensity of a signal in decibel over an aperture angle in degrees. The antenna diagram 117, or beamforming, has a comparatively broad main lobe 118, but no grating lobes. The radar antenna 100 may be configured to admit a full steering capability over an angle of ±60° for the radio signals at the first carrier frequency 113. An object may be detected at a comparatively low accuracy 11.

In a lower part b), the figure shows a diagram for illustrating an antenna gain 127 (antenna diagram) of radio signals at the higher second carrier frequency 123 for the embodiment of the radar antenna 100. The diagram shows an intensity of a signal in decibel over an aperture angle in degrees. The antenna diagram 127 has a narrow main lobe 128 (or main beam), and shows two grating lobes 129. The diagram shows a two-dimensional section of the antenna gain 127; the full antenna gain 127 may have 9 narrow lobes (including the main lobe 128 as a central lobe) in a full three-dimensional azimuth/elevation pattern. The object may be detected at a comparatively high accuracy 12.

The number of side lobes generally depends on the carrier frequency of the radio signal and the (minimal) distance between antenna elements. In the present example, the number of side lobes may also be regarded to depend on the second carrier frequency, or more precisely on the quotient of the second carrier frequency over the first carrier frequency. The number of side lobes indicated above occurs for a quotient of 3.5 (i.e., 7:2), and may be different for other values of that quotient.

The fact that the first distance 115 between any two antenna elements 110 of the first set and the second distance 125 between any two antenna elements 120 of the second set are both bounded below by one half of a wavelength corresponding to the first carrier frequency results in an extremely narrow width of the antenna beam 128, and therefore in a high measurement accuracy. It also produces pronounced grating lobes 129. However, the antenna elements 120 configured to transmit or receive the higher second carrier frequency intentionally miss their own lambda/2 criterion. They may be arranged at a minimal distance 125 of e.g. a double of the wavelength corresponding to the second carrier frequency. Data from the radio signals transmitted or received at the first carrier frequency 113 can be employed to exclude false detections due to the grating lobes 129. Furthermore, this feature reduces a number of channels of the second carrier frequency, and therefore can decrease production costs.

**Fig. 4** illustrates how data from radio signals transmitted or received at the first carrier frequency 113 may be employed to improve an accuracy of detection by radio signals transmitted or received at the second carrier frequency 123. The figure shows a diagram for an intensity of a signal in the first carrier frequency and in the second carrier frequency in decibel over an aperture angle in degrees.

The relative sparseness of the second set of antenna elements 120 has two consequences generally considered to be a disadvantage in conventional radar antennas: Firstly, a directivity and therefore a radiated power of the radar antenna 100 cannot be retrieved completely, as energy is wasted inside the grating lobes 129. For the disclosed radar antenna 100 or system, this disadvantage does not apply, as a range performance of radio signals at the second carrier frequency 123 does not necessarily need to be higher than that of radio signals at the first carrier frequency 113. Secondly, the grating lobes 129 in the antenna gain 127 of the radar antenna 100 can lead to false detections or artifacts in the second carrier frequency. However, in the disclosed radar antenna 100 this disadvantageous consequence is likewise remedied, as the measurement at the second carrier frequency can be completely filtered by means of the measurement at the primary frequency. This filtering can be implemented within a signal processing on a level of a range-Doppler matrix.

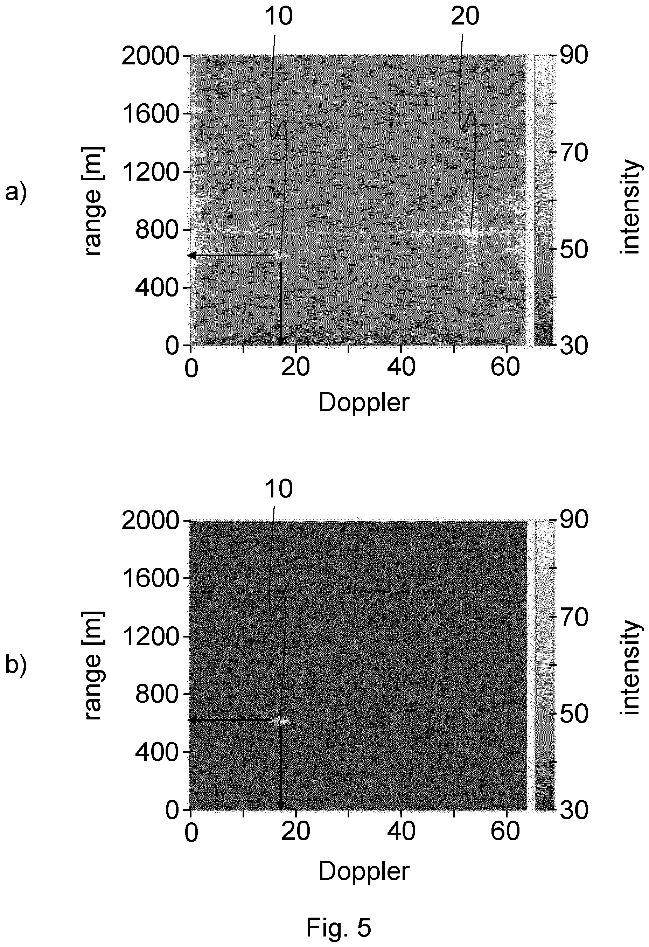

**Fig. 5** illustrates data from a range-Doppler matrix. An upper part a) of the figure shows unfiltered radar data obtained at the second carrier frequency, wherein a horizontal direction corresponds to a Doppler shift, and a vertical direction corresponds to a range. An intensity scale for the radar data is indicated to the right of this data. This unfiltered radar data shows, next to data pertaining to the actual object 10, artificial objects 20 (false targets) due to the grating lobes 129 of the antenna gain 127.

A lower part b) of the figure shows radar data obtained at the second carrier frequency after using a filter obtained from radar data at the first carrier frequency. In this part of the figure, a horizontal direction again corresponds to the Doppler shift, and a vertical direction corresponds to the range. An intensity scale for the radar data is indicated to the right of this data. Due to the localization of the object 10 e.g. in the main lobe 118 of the antenna gain 117 at the first carrier frequency, the artificial objects 20 are filtered away. As the antenna gain 127 at the second carrier frequency has lobes 128, 129 which are much narrower than the main lobe 118 at the first carrier frequency, an accuracy of detection of the object 10 is eventually greatly improved.

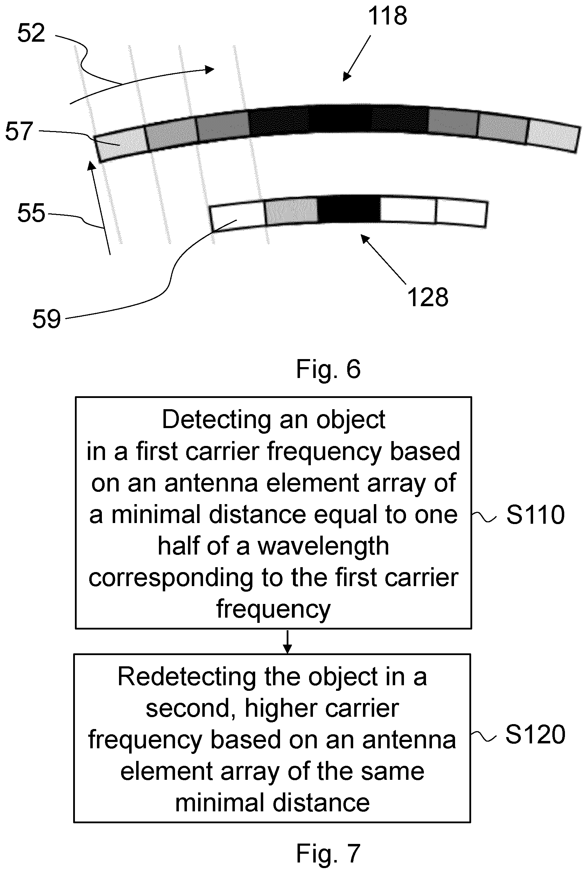

**Fig. 6** further illustrates an evaluation of azimuth or elevation after range and Doppler filtering in the range-Doppler matrix. The figure illustrates data for an azimuth clustering comparison, showing, for an angular direction 52 and a range direction 55, a range-azimuth-elevation cell 57 for a radar signal gain of the radar signal at the primary frequency 113 as well as a cell 59 for a radar signal gain of the radar signal at the secondary frequency 123, wherein a result in the cell 59 corresponding to the secondary frequency is obtained after filtering by means of a result in the cells 57 corresponding to the primary frequency. Intensity is highest in the main lobe 118 of the radar signal in the primary frequency 113, and - after filtering of the data - in the main lobe 128 of the radar signal in the secondary frequency 123, resulting in overall higher measurement accuracies in azimuth and elevation.

**Fig. 7** shows steps of a method for radar detection of an object. The method comprises detecting S110 the object based on transmitting, by a first set of antenna elements 110, a first radio signal with a first carrier frequency 113. The method further comprises redetecting S120 the object, based on having detected S110 the object and based on transmitting, by a second set of antenna elements 120, a second radio signal with a second carrier frequency 123 which is higher than the first carrier frequency, wherein a first distance 115 between any two antenna elements 110 of the first set and a second distance 125 between any two antenna elements 120 of the second set are both bounded below by one half of a wavelength corresponding to the first carrier frequency.

Detecting S110 the object may be part of a surveillance process, and may include determining an azimuth, an elevation, a range and/or a velocity of the object.

Redetecting S120 the object may be part of a fire control process, and may comprise filtering a position of the object within data obtained by transmitting the second radio signal, based on results obtained from detecting the object.

The description and drawings merely illustrate the principles of the disclosure. It will thus be appreciated that those skilled in the art will be able to devise various arrangements that, although not explicitly described or shown herein, embody the principles of the disclosure as defined by the claims and supported by the description, and are included within its scope.

In particular, while each described embodiment may stand on its own as a separate example, it is to be noted that in other embodiments the defined features can be combined differently, i.e. a particular feature described in one embodiment may also be realized in other embodiments. Such combinations are covered by the disclosure herein, unless it is stated that a specific combination is not intended.

Although the invention has been illustrated and described in detail by way of preferred embodiments, the invention is not limited by the examples disclosed, and other variations can be derived from these by the person skilled in the art without leaving the scope of the invention.

### List of reference signs

- 10: object
- 11: detection with low accuracy
- 12: detection with high accuracy
- 20: artificial object
- 52: angular direction
- 55: range direction
- 57: cell for radar signal at first carrier frequency
- 59: cell for radar signal at second carrier frequency
- 100: radar antenna
- 110: antenna elements of the first set
- 113: radio signal with the first carrier frequency
- 115: first distance
- 117: antenna diagram or gain at first carrier frequency
- 118: main lobe of radar signal at first carrier frequency
- 120: antenna elements of the second set
- 123: radio signal with the second carrier frequency
- 125: second distance
- 127: antenna diagram or gain at first carrier frequency
- 128: main lobe of radar signal at second carrier frequency
- 129: side lobe of radar signal at second carrier frequency
- 200: signal handling component
- S110, S120,: steps of a method

## Claims

1. A radar antenna (100), comprising:
a first set of antenna elements (no), configured to transmit or receive radio signals at a first carrier frequency (113); and
a second set of antenna elements (120), configured to transmit or receive radio signals at a second carrier frequency (123) which is higher than the first carrier frequency,
wherein the first set of antenna elements (no) is disjoint from the second set of antenna elements (120), and wherein a first distance (115) between any two antenna elements (110) of the first set and a second distance (125) between any two antenna elements (120) of the second set are both bounded below by one half of a wavelength corresponding to the first carrier frequency.

2. The radar antenna (100) according to claim 1, wherein antenna elements (no) of the first set are arranged in a first array, and antenna elements (120) of the second set are arranged in a second array, and wherein a nearest-neighbor distance (115) of the first array is equal to a nearest-neighbor distance (125) of the second array.

3. The radar antenna (100) according to any one of the preceding claims, wherein the radar antenna (100) is an electronically scanned array antenna.

4. A signal handling component (200) for a radar antenna (100),
the radar antenna (100) comprising a first set of antenna elements (110) and a second set of antenna elements (120), wherein a first distance (115) between any two antenna elements (110) of the first set and a second distance (125) between any two antenna elements (120) of the second set are both bounded below by one half of a wavelength corresponding to the first carrier frequency,
wherein the signal handling component (200) is configured:
to handle, via the first set of antenna elements (110), radio signals at the first carrier frequency (113), and
to handle, via the second set of antenna elements (120), radio signals at a second carrier frequency (123) which is higher than the first carrier frequency (113).

5. A method for radar detection of an object, the method comprising:
detecting (S110) the object based on transmitting, by a first set of antenna elements (110), a first radio signal with a first carrier frequency (113);
redetecting (S120) the object, based on having detected the object and based on transmitting, by a second set of antenna elements (120), a second radio signal with a second carrier frequency (123) which is higher than the first carrier frequency, wherein a first distance (115) between any two antenna elements (110) of the first set and a second distance (125) between any two antenna elements (120) of the second set are both bounded below by one half of a wavelength corresponding to the first carrier frequency.

6. The method according to claim 5, wherein detecting (S110) the object includes determining one or more of the following:
- an azimuth of the object,
- an elevation of the object,
- a range of the object,
- a velocity of the object.

7. The method according to claim 5 or claim 6, wherein redetecting (S120) the object comprises filtering, based on having detected the object, a position of the object within data obtained by transmitting the second radio signal.

8. A radar system, comprising:
a radar antenna (100) with a first set of antenna elements (110) and a second set of antenna elements (120), wherein a first distance (115) between any two antenna elements (110) of the first set and a second distance (125) between any two antenna elements (120) of the second set are both bounded below by one half of a wavelength corresponding to the first carrier frequency; and
the signal handling component according to claim 4.

9. The radar system according to claim 8, wherein the radar antenna (100) is configured according to any one of the claims 1 to 3.

10. The radar system of claim 8 or claim 9, wherein the radar antenna (100) comprises at least one further set of antenna elements such that a respective further distance between any two antenna elements of the at least one further set is bounded below by one half of the wavelength corresponding to the first carrier frequency, and wherein the signal handling component is configured to handle, via the at least one further set of antenna elements, radio signals at a corresponding further carrier frequency which is higher than the first carrier frequency (113).

11. The radar system according to any one of the claims 8 to 10, wherein the radar system is configured to perform, based on the radar antenna (100) and the signal handling component (200), the method according to any one of the claims 5 to 7.

12. The radar system according to any one of the claims 8 to 11, wherein the radar system is configured to employ radio signals at the first carrier frequency (113) for surveillance, and radio signals at the second carrier frequency (123) for fire control of a weapons system.

13. The radar system according to any one of the claims 8 to 11, wherein the radar system is at least a part of one or more of the following:
- a radar surveillance system,
- a radar communication system,
- a radar traffic control system,
- a radar navigation control system.
